# EUROPÄISCHE PATENTSCHRIFT

(11) **EP 0 380 441 B1**
(45) Veröffentlichungstag und Bekanntmachung des Hinweises auf die Patenterteilung: **05.04.1995**
(21) Anmeldenummer: 90810019.1
(22) Anmeldetag: 09.01.1990
(51) Int. Cl.: G01S 15/10, G01S 7/52

(54) **Ultraschall-Messgerät**
Ultrasonic measurement apparatus
Appareil de mesure à ultrason

(30) Priorität: 25.01.1989 CH 220/89
(43) Veröffentlichungstag der Anmeldung: 01.08.1990
(73) Patentinhaber: GRIESHABER AG, CH-8152 Glattbrugg (CH)
(72) Erfinder: Fausch, Christian, H., CH-8050 Zürich (CH); Meier, Beat, CH-8153 Rümlang (CH)
(74) Vertreter: Feldmann, Clarence Paul

(56) Entgegenhaltungen:
- FR-A- 2 499 252
- US-A- 3 952 279
- US-A- 4 259 734

## Beschreibung

Die vorliegende Erfindung betrifft ein Ultraschall-Messgerät, das mit mindestens vier Frequenzen arbeitet, mit mindestens einer Lautsprecher-Mikrophoneinheit, die mit einer Sende-/Empfangsschaltung verbunden ist, mit einem Bandpassfilter, über das die empfangenen, reflektierten Signale zu einer SchwellwertErfassungsschaltung geliefert werden und mit einem Mikroprozessor mit Programmspeicher.

Messgeräte mit ähnlichem Aufbau sind in vielen Ausführungsformen bekannt und werden in der Fertigungs-, Mess- und Regeltechnik sowie in der Forschung und Industrie in zahllosen Anwendungen eingesetzt.
Trotz zahlreichen Verbesserungen über die Jahre führen die bekannten Ultraschall-Messgeräte immer wieder zu einer statistisch gesehen grossen Anzahl von Fehlschaltungen. Die Gründe hierfür sind vielgestaltig. Die wichtigsten Faktoren sind hohe Sensibilität, fremde Schallquellen, Mehrfach-Reflexionen und das Messfeld durch kreuzende Objekte. Bei der Anwendung an führerlosen Fahrzeugen, die mit solchen Messgeräten ausrüstet sind, kommt zudem noch die gegenseitige Beeinflussung hinzu, weil die Sendesignale des einen Fahrzeuges von einem anderen Fahrzeug als Reflexionssignale empfangen werden kann.
Aus der US-A-4′259′734 ist ein Ultraschallmessgerät der eingangs beschriebenen Art bekannt, bei dem jeder Sendefrequenz ein Bandpassfilter zur Detektion der Empfangssignale fest zugeordnet ist. Dieses Gerät, welches mit gleichbleibenden Frequenzfolgen arbeitet, ist für die Meereskartographie geeignet und weist eine besonders hohe Auflösung auf.
Die vorliegende Erfindung stellt sich die Aufgabe ein Ultraschall-Messgerät zu schaffen, das trotz hoher Sensibilität zu weniger Fehlschaltungen beziehungsweise Fehlmessungen führt und insbesondere auch für die Verwendung an führerlosen Fahrzeugen geeignet ist.
Diese komplexe und vielgestaltige Aufgabe löst ein Ultraschall-Messgerät der eingangs erwähnten Art mit den Merkmalen des Patentanspruches 1.

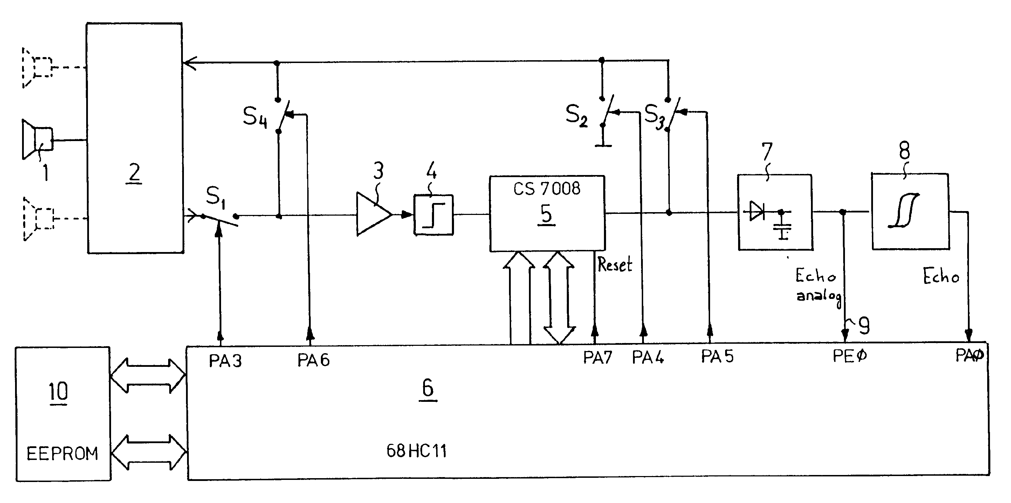

In der Zeichnung ist ein Ausführungsbeispiel des Erfindungsgegenstandes dargestellt und anhand der nachfolgenden Beschreibung erläutert.

Mit einem sowohl als Lautsprecher in der Sendefunktion und als Mikrophon in der Empfangsfunktion arbeitenden Bauteil, dem Transducer 1, lassen sich Signale gewünschter Frequenzen sowohl ausstrahlen als auch aufnehmen. Der Transducer steht in direkter Verbindung mit einer Sende-/Empfangsschaltung 2, die je nach Funktion des Transducers 1 entweder als Treiber- oder als Verstärkerschaltung arbeitet. Die Empfangs- beziehungsweise Reflexionssignale werden über einen Verstärker 3 und einen nachfolgenden Begrenzer 4 aufbereitet und nachfolgend einem programmierbaren Filter 5 zugeleitet. Hierzu eignet sich beispielsweise das digital ansteuerbare Universal-Filter mit der Typenbezeichnung CS 7008 der Firma Crystal Semiconductor Corporation in Austin, Texas (USA). Hiermit lassen sich Filter beliebiger Charakteristik erzeugen. Die Einheit umfasst vier unabhängig voneinander programmierbare biquadratische Filtereinheiten. Hiermit lassen sich unterschiedliche Bandpassfilter achter Ordnung mit einer Bandbreite von 2 kHz und einer Unterdrückung von 80 dB realisieren. Die Steuerung des programmierbaren Filters 5 erfolgt über einen Mikroprozessor 6, beispielsweise des Typs 68HCllAl der Firma Motorola Corporation. Das programmierbare Filter 5 ist mit dem Mikroprozessor 6 über einen Datenbus verbunden. Eine intergrierte Schaltung enthält die vier Analogschalter S1,S2,S3,S4 in Form von beispielsweise Feldeffekttransistoren, die vom Mikroprozessor 6 angesteuert werden.

Die das programmierbare Filter 5 durchlaufenden Signale gelangen zu einer Gleichrichter-Integrator-Schaltung 7 mittels der die Hüllk-urve des eingehenden Signals gebildet wird. Das die Hüllkurve repräsentierende Signal wird nun einerseits abgetastet und die analogen Echosignalwerte dem Mikroprozessor 6 über den Eingang 9 zugeleitet und andererseits auf eine Komparatorschaltung 8 geführt, die beim Erreichen eines vorgebbaren Schwellwertes ein Schaltsignal an den Mikroprozessor liefert.
Die so erhaltenen Signale lassen sich im Mikroprozessor 5 durch das im Programmspeicher EPROM 10 befindliche Programm auswerten und entsprechende Steuersignale erzeugen und weiterleiten, falls sich Objekte im Messbereich befinden die dies erfordern.
Nachfolgend soll nun die Funktion des Ultraschall-Messgerätes noch näher erläutert werden. Das Sendesignal des Ultraschall-Messgerätes wird durch entsprechende Einstellungen der Analogschalter S1-S4 erzeugt. Beim Senden sind die Schalter S1 und S2 offen und die Schalter S3 und S4 geschlossen. In diesem Fall wirkt der entsprechend zugeschaltete Bandpassfilter durch Rückkopplung als Oszillator und schwingt mit seiner Resonanzfrequenz. Nach einer Sendezeit von beispielsweise einer Millisekunde schliessen die Schalter S1 und S2 und die Schalter S3 und S4 öffnen sich; das Messgerät arbeitet auf Empfang während den nachfolgenden maximal 99 ms. Hierauf wird vom Mikroprozessor 6 im programmierbaren Filter 5 durch das Laden des nächsten Filterprogrammes aus dem Programmspeicher 10 die nächste Frequenz der Folge eingestellt und der vorbeschriebene Ablauf wiederholt sich. Insgesamt werden vier Sendesequenzen unterschiedlicher Frequenz ausgestrahlt, die zusammen einen Messzyklus bilden. Die Frequenzfolge kann nach jedem Messzyklus geändert werden, doch wird üblicherweise die Frequenzfolge beibehalten solange bis das Messgerät feststellt, dass in ihren Empfangsbereich ein Messgerät mit gleicher Frequenzfolge arbeitet. Da zwei Messgeräte nie die genau gleiche Sensibilität und Empfangsbedingungen haben, schaltet jenes Messgerät, das zuerst die Frequenzfolge des zweiten Ultraschall-Messgerätes ermittelt auf eine neue Frequenzfolge um. Die neue Frequenzfolge wird dabei von einem Zufallsgenerator bestimmt. Die erste Frequenz einer neuen Frequenzfolge unterscheidet sich dabei immer von der letzten Frequenz der alten Frequenzfolge. Sinnvoll sind daher die nachfolgenden sechs Frequenzfolgen:
f1, f2, f3, f4,
f1, f2, f4, f3,
f1, f3, f2, f4,
f1, f3, f4, f2,
f1, f4, f2, f3,
f1, f4, f3, f2.

In einem bevorzugten Ausführungsbeispiel der Erfindung arbeitet man mit vier unterschiedlichen Frequenzen im Bereich von 45-60 kHz.

Die Verwendung einer Ultraschall-Frequenzfolge eliminiert diverse Möglichkeiten von Fehlschaltungen. Ausgewertet wird immer nur das erste Reflexionssignal , welches über der Schwellwertgrenze liegt. Dieses benötigte die kürzeste Laufzeit und zeigt daher das nächstliegende Objekt im Messbereich an. Kommt ein Reflexionssignal wegen eines Mehrfachechos noch bei der Wiederholung derselben Sendefrequenz an, so hat es bereits die vierfache Laufzeit gegenüber einem neuen Reflexionssignal und fällt aus der Wertung, weil das Reflexionssignal bereits derart schwach ist, dass es mit Sicherheit unter der Ansprechgrenze des Schwellwertes liegt. Mehrfach reflektierte Signale, die zwar bezüglich ihrer Intensität noch über dem Schwellwert liegen, aber während der Empfangsperiode einer nachfolgenden Frequenz eintreffen, werden durch das Bandpassfilter eliminiert. Die Elimination störender Mehrfachreflexionen erlaubt den Einsatz dieses Ultraschallmessgerätes in Hohlräumen, beispielsweise zur Pegelüberwachung in Tankanlagen.

Die Verwendung von Frequenzfolgen eliminiert aber auch Fehlschaltungen durch unregelmässig auftretende akkustische Störsignale , wie sie oftmals in Fabrikationsstrassen auftreten. Die festgestellten Reflexionssignale gelangen in einen Zwischenspeicher des Mikroprozessors 6 der wie ein Schieberegister arbeitet. Die Speicherplätze werden jeweils mit den Ergebnissen der vier letzten Messungen geladen. Jede neue Messung ersetzt automatisch die älteste Messung. Der Prozessor berechnet automatisch nach jeder Messung wieder den Mittelwert aus den letzten drei oder vier Messungen, wodurch eine hohe Präzission des Messergebnisses erzielt wird. Werden weniger als drei Messwerte übereinstimmender Grösse ermittelt, fällt das Ergebnis als nicht erkannt aus der Wertung und bewirkt keine Schaltung. Aus diesem Grund werden Störsignale, die eine Bandbreite von lediglich einem oder zwei Frequenzen der Frequenzfolge überstreichen nicht erkannt. Aber auch breitbandige Störsignale die kürzer als drei Sende-Empfangszeiten dauern, wie sie beispielsweise durch elektrische Störungen verursacht werden, fallen aus der Wertung und führen somit nicht zu Fehlschaltungen.
Ein weiterer erheblicher Vorteil des erfindungsgemässen Ultraschall-Messgerätes besteht in der bereits beschriebenen Eigenschaft, dass der Mikroprozessor die Störung einer zweiten Messonde, die auf derselben Frequenzfolge arbeitet feststellen kann. Damit eignet sich die Sonde in hervorragenderweise für die Anwendung an führerlosen Fahrzeugen. Aber auch die Anwendung mehrerer gleicher Ultraschall-Messonden in einem relativ kleinen Raum ist möglich, weil die Messgeräte sich selber eine Frequenzfolge suchen, die nicht von den Nachbarmessgeräten gestört wird. Der Anwender braucht somit nicht darauf zu achten, dass er verschiedene Messgeräte mit unterschiedlich arbeitender Frequenz benützt.

## Patentansprüche

1. Ultraschall-Messgerät, das mit mindestens vier verschiedenen Frequenzen arbeitet, mit mindestens einer Lautsprecher-Mikrophoneinheit (1), die mit einer Sende-/Empfangsschaltung (2) verbunden ist, mit einem Bandpassfilter, über das die empfangenen, reflektierten Signale zu einer Schwellwert-Erfassungsschaltung geliefert werden und mit einem Mikroprozessor mit Programmspeicher, dadurch gekennzeichnet, dass das Bandpassfilter ein programmierbares Bandpassfilter (5) ist, das über einen Datenbus mit dem Mikroprozessor (6) mit dem Programmspeicher (10) (EPROM) in Verbindung steht, wobei das programmierbare Bandpassfilter (5) wahlweise, auswählbar durch integrierte Schalter (S1,S2,S3,S4), die vom Mikroprozessor (6) gesteuert werden, als Oszillator oder als Filter betreibbar ist und auf den mindestens vier verschiedenen Frequenzen arbeitet, und dass die am Ausgang des programmierbaren Filters anliegenden Signale über einen Gleichrichter-Integrator (7) und einen Schwellwertschalter (8) dem Mikroprozessor (6) zur Auswertung zuführbar sind.

2. Ultraschall-Messgerät nach Anspruch 1, dadurch gekennzeichnet, dass zwischen der Sende-/Empfangschaltung (2) und dem programmierbaren Filter (5) ein Verstärker (3) und ein nachfolgender Begrenzer (4) angeordnet sind.

3. Ultraschall-Messgerät nach Anspruch 1, dadurch gekennzeichnet, dass der Mikroprozessor (6) einen Zufallsgenerator aufweist, mittels dem die Frequenzfolge, mit dem das programmierbare Filter (5) arbeitet, auf einen Steuerbefehl hin änderbar ist.

4. Ultraschall-Messgerät nach Anspruch 1, dadurch gekennzeichnet, dass der Mikroprozessor (6) mehrere Speicherplätze besitzt, in denen alle Messdaten der jeweils vier letzten Messungen mit unterschiedlichen Frequenzen speicherbar sind, und zudem einen Rechner aufweist, der die Mittelwerte mindestens drei der vier zuletzt erfassten Daten ermittelt.

5. Ultraschall-Messgerät nach Anspruch 1, dadurch gekennzeichnet, dass der Ausgang des Integrators (7) über einen Eingang (9) direkt und über den Schwellwertschalter (8) indirekt am Mikroprozessor (6) angeschlossen ist, wobei die vom Integrator gebildete Hüllkurve zur Abtastung über den Eingang (9) erfasst wird und mit den Schwellwertmesszeiten, die vom Komparator ermittelt worden sind, zur Berechnung einer korrigierten Echolaufzeit dienen.

## Claims

1. Ultrasonic measurement apparatus which operates with at least four different frequencies, comprising at least one loudspeaker microphone unit (1), which is connected to a transmitting/receiving circuit (2), a band-pass filter by means of which reflected signals received are fed to a threshold detection circuit, and a microprocessor with a program memory, characterised in that the band-pass filter is a programmable band-pass filter (5), which is connected by means of a data bus to the microprocessor (6) with the program memory (10) (EPROM), that the programmable bandpass filter (5) is optionally operable on the at least four different frequencies as an oscillator or as a filter selectable by integrated switches (S1, S2, S3, S4) which are controlled by the microprocessor (6), and that the signals at the output of the programmable filter can be fed by means of a rectifier-integrator (7) and a threshold switch (8) to the microprocessor (6) for evaluation.

2. Ultrasonic measurement apparatus according to claim 1, characterised in that an amplifier (3) and a following limiter (4) are connected between the transmitting/receiving circuit (2) and the programmable filter (5).

3. Ultrasonic measurement apparatus according to claim 1, characterised in that the microprocessor (6) has a random number generator, by means of which the frequency sequence, with which the programmable filter (5) operates, can be modified as a result of a control instruction.

4. Ultrasonic measurement apparatus according to claim 1, characterised in that the microprocessor (6) has several storage locations, in which can be stored all the measured data in each case of the four last measurements at the different frequencies, whilst also having a computer, which determines the mean values of at least three of the four last acquired data measurements.

5. Ultrasonic measurement apparatus according to claim 1, characterised in that the output of the integrator (7) is connected directly by means of an input (9) and indirectly by means of the threshold switch (8) to the microprocessor (6), an envelope curve formed by the integrator being detected for scanning by means of the input (9), the threshold measurement times, determined by a comparator, being used for the calculation of a corrected echo interval.

## Revendications

1. Appareil de mesure à ultrasons qui fonctionne sur au moins quatre fréquences différentes, comportant au moins un combiné haut-parleur-microphone (1), lequel est réuni à un circuit récepteur/émetteur (2), muni d'un filtre passe-bas à travers lequel les signaux réfléchis reçus sont délivrés à un circuit de saisie à seuil et muni d'un microprocesseur comportant une mémoire programmable, caractérisé en ce que le filtre passe-bas est un filtre passe-bas programmable (5) lequel est relié par un bus de données au microprocesseur (6) comportant la mémoire programmable (10) (EPROM), ledit filtre passe-bas programmable (5) pouvant au choix, au moyen de commandes intégrées (S1, S2, S3, S4), commandées par le microprocesseur (6), faire office d'oscillateur ou de filtre et fonctionner sur les fréquences différentes, au nombre de quatre au moins, et en ce que les signaux appliqués à la sortie du filtre programmable peuvent être amenés pour y être analysés au microprocesseur (6) à travers un intégrateur redresseur (7) et une commande à seuil (8).

2. Appareil de mesure à ultrasons selon la revendication 1, caractérisé en ce que, entre le circuit récepteur/émetteur (2) et le filtre (5) programmable, sont disposés successivement un amplificateur (3) et un limiteur (4).

3. Instrument de mesure à ultrasons selon la revendication 1, caractérisé en ce que le microprocesseur (6) présente un générateur de nombres aléatoires au moyen duquel il est possible de faire varier, sur ordre, la séquence des fréquences sur lesquelles fonctionne le filtre (5) programmable.

4. Appareil de mesure à ultrasons selon la revendication 1, caractérisé en ce que le microprocesseur (6) possède plusieurs mémoires dans lesquelles sont mémorisables toutes les données afférentes aux quatre dernières mesures réalisées à des fréquences différentes, et qu'il présente en outre un calculateur qui calcule les valeurs moyennes d'au moins trois des quatre dernières données saisies.

5. Appareil de mesure à ultrasons selon la revendication 1, caractérisé en ce que la sortie de l'intégrateur (7) est connectée directement à travers une entrée (9) et indirectement à travers la commande à seuil (8) au microprocesseur (6), tandis que les courbes enveloppantes formées par l'intégrateur pour le balayage sont saisies à l'entrée (9) et, avec les temps de mesure à seuil obtenus par le comparateur, servent à calculer une durée corrigée de propagation de l'écho.
